Europäisches Patentamt

European Patent Office

Office européen des brevets

(19)

(11) Veröffentlichungsnummer: **0 200 852
B1**

(12) **EUROPÄISCHE PATENTSCHRIFT**

(45) Veröffentlichungstag der Patentschrift: **27.12.90**

(21) Anmeldenummer: **86101245.8**

(22) Anmeldetag: **31.01.86**

(51) Int. Cl.⁵: **C 08 J 3/12, C 08 L 77/00, C 09 D 177/02**

(54) **Verfahren zur Herstellung von Beschichtungsmitteln auf der Basis von Polyamiden nach dem Fällungsverfahren.**

(30) Priorität: **23.03.85 DE 3510690**

(43) Veröffentlichungstag der Anmeldung:
**12.11.86 Patentblatt 86/46**

(45) Bekanntmachung des Hinweises auf die Patenterteilung:
**27.12.90 Patentblatt 90/52**

(84) Benannte Vertragsstaaten:
**AT BE CH DE FR GB IT LI NL SE**

(56) Entgegenhaltungen:
**EP-A-0 014 772
DE-B-2 855 920
FR-A-2 327 283**

(73) Patentinhaber: **HÜLS AKTIENGESELLSCHAFT
- RSP Patente / PB 15 - Postfach 13 20
D-4370 Marl 1 (DE)**

(72) Erfinder: **Mumcu, Salih, Dr.
Leverkusener Strasse 12
D-4370 Marl (DE)**
Erfinder: **Panoch, Hans-Joachim, Dr.
Rehwinkel 14
D-4358 Haltern (DE)**
Erfinder: **Rüter, Jörn, Dr.
Leunaer Strasse 15
D-4370 Marl (DE)**

**Die Akte enthält technische Angaben, die nach dem Eingang der Anmeldung eingereicht wurden und die nicht in dieser Patentschrift enthalten sind.**

**Beschreibung**

Gegenstand der Erfindung ist ein Verfahren zur Herstellung von nachkondensierbaren, hochmolekularen Beschichtungsmitteln auf der Basis von Polyamiden mit mindestens zehn aliphatisch gebundenen Kohlenstoffatomen pro Carbonamidgruppe oder Copolyamiden oder einer Mischung aus Homo- und Copolyamiden, welche mindestens 70% der genannten Bausteine enthalten, nach dem Fällungsverfahren.

Es ist bekannt, pulverförmige Beschichtungsmittel auf der Basis von Polyamiden zur Herstellung lackähnlicher Überzüge von Metallen einzusetzen. Die Beschichtung erfolgt nach dem Schmelzüberzugsverfahren, d.h. nach dem Wirbelsinterverfahren, dem Flammspritzverfahren oder nach dem elektrostatischen Beschichtungsverfahren. Die Polyamidpulver werden erhalten durch Fällen des Polyamids aus Lösungen (am 10.05.51 ausgelegte Unterlagen der deutschen Patentanmeldung S 2 80 5/39 b 22/04 oder Äquivalente FR—A—989 062) oder durch Mahlen des Polyamidgranulats, vorzugsweise bei tiefen Temperaturen unter Inertgasatmosphäre.

Das Fällungsverfahren der vorgenannten französischen Patentschrift beschreibt das Ausfällen von Polyamidpulvern aus Ethanol durch Abkühlen der heißen Polyamidlösung durch äußere Einwirkung oder durch Abkühlenlassen. Allein durch Abkühlen bzw. Abkühlenlassen der heißen Polyamidlösung werden Pulver mit hohem Feinanteil erhalten, die zu Staubauswurf im Wirbelbett führen.

Schließlich treten bei einer solchen Arbeitsweise unterwünschte Agglomerate auf, die anschließend durch Zerreiben oder Zermahlen in die erforderliche Pulvergröße überführt werden müssen. Außerdem werden bei einem solchen Verfahren nicht reproduzierbare, d.h. unterschiedliche Chargen erhalten.

Es ist ferner bekannt, Polyamidpulver herzustellen, indem man niedermolekulare Polyamide mahlt und die so erhaltenen Pulver anschließend auf die gewünschte Viskosität bringt, indem man sie in an sich bekannter Weise auf Temperaturen unterhalb des Schmelzpunktes erhitzt (britische Patentschrift 535 138, deutsche Offenlegungsschrift 15 70 392).

Auch Polylaurinlactampulver werden nach diesen bekannten Verfahren hergestellt und nach den ebenfalls bekannten Verfahren zum Beschichten eingesetzt (Chem. Ind. November 1968, S. 783 bis 791; Modern Plastics, Februar 1966, S. 153 bis 156). Da Polylaurinlactampulver nicht immer den geforderten Bedingungen hoher Elastizität, guter Kantenbeschichtung, glatter Oberfläche, Beständigkeit gegenüber alkalischen wäßrigen Lösungen genügen und vielfach bei der Verarbeitung insbesondere zum Qualmen neigen, sind die verschiedenartigsten Verbesserungen bekanntgeworden, wie weichmacherhaltige Polylaurinlactampulver (deutsche Auslegeschrift 16 69 821), solche aus einen Gemisch aus Homopolylaurinlactam und laurinlactamhaltigen Copolyamiden (deutsche Auslegeschrift 21 44 606), solche, die N-alkoximethylgruppenhaltige Polyamide neben sauer reagierenden Katalysatoren enthalten (deutsche Offenlegungsschrift 22 22 122), oder Gemische aus Polyamiden mit 8 bis 11 aliphatische gebundenen Kohlenstoffatomen pro Carbonamidgruppe, alkoxialkylgruppentragenden Aminoplasten und sauer reagierenden Katalysatoren (deutsche Offenlegungsschrift 22 22 123). Diese Pulver zeigen in einzelnen Fällen gute Eigenschaften, genügen jedoch noch nicht voll allen geforderten Bedingungen.

Ein verbessertes Verfahren wird in der deutschen Auslegeschrift 25 45 267 beschrieben. Dieses Verfahren befriedigt insofern noch nicht vollständig, da zur Herstellung von pigmentfreien Pulvern ein Mahlverfahren angewendet und zur Herstellung von pigmentierten Pulvern das Fällungsverfahren betrieben werden muß. Schließlich ist für das Gelingen dieses Verfahrens Voraussetzung, Polylaurinlactamgranulate einzusetzen, welche ausschließlich durch hydrolytische Polymerisation in Gegenwart bestimmter Mengen Phosphorsäure hergestellt worden sind.

Ein wesentlich verbessertes Verfahren wird in der DE—B—29 06 647 bzw. der äquivalenten EP—B1—0 014 772 beschrieben.

Hochmolekulare pulverförmige Polyamide sind als Beschichtungsmittel wegen ihrer hohen Zähigkeit erwünscht beim Beschichten von großen Metallteilen, insbesondere solchen Teilen mit scharfen Kanten, allgemein gesprochen von Formteilen, die sehr kleine Krümmungsradien in ihrer Formgebung enthalten.

Grundsätzlich kann man nach den bekannten Verfahren auch hochmolekulare Beschichtungspulver herstellen. Es hat sich jedoch gezeigt, daß diese nicht ohne weiteres geeignet sind zur Herstellung elastischer Überzüge bei großen Formteilen mit scharfen Kanten.

Bekanntlich erfolgt die Nachkondensation des Beschichtungsmittels während des Beschichtungsvorganges. Zu diesem Zweck ist es erforderlich, daß das Polyamidpulver ausreichende Mengen eines sauren Katalysators, wie Phosphorsäure, enthält.

Üblicherweise enthalten die nach dem bekannten Fällungsverfahren herstellbaren hochmolekularen Beschichtungspulver 0 bis 0,2 Gewichtsprozent Phosphorsäure. Diese Phosphorsäurekonzentration ist aber zu niedrig, um eine ausreichende Polykondensationsgeschwindigkeit zur Nachkondensation beim Beschichtungsvorgang zu erzielen. Auch beim Einsatz ungeregelter Polyamide mit äquimolaren Amino- und Carboxylendgruppen, ist keine hinreichende Nachkondensation der Überzüge zu erreichen.

Es ist zwar möglich, von höhermolekularen Polyamiden, d.h. solchen mit einem $\eta_{rel}$-Wert=1,7, auszugehen, die hinreichende Mengen Phosphorsäure, d.h. mindestens 0,4 Gewichtsprozent, enthalten. Bei der Herstellung der Pulver nach dem Fällverfahren, ausgehend von derartigen Polyamiden, erleiden diese Polyamide beim Lösen und Fällen jedoch einen so starken Abbau, daß so hergestellte Pulver trotz ihrer Nachkondensierbarkeit nicht als Beschichtungspulver zum Beschichten dickwandiger Metallteile geeignet sind, da sie eine unzureichende Kantenabdeckung zeigen.

Derartige Pulver hat man daher üblicherweise bisher nach dem Kaltmahlverfahren hergestellt, d.h. nach dem Verfahren der DE—B—28 55 920.

Nach dem Mahlverfahren hergestellte Beschichtungspulver besitzen jedoch eine ungünstige Korngrößenverteilung, so daß deren Herstellweg einen zusätzlichen hohen Klassieraufwand erfordert.

Aufgabe der Erfindung ist es daher, ein Verfahren bereitzustellen, das es erlaubt, nach dem Fällverfahren Beschichtungspulver herzustellen, die beim Beschichtungsvorgang zu hochmolekularen Überzügen nachkondensierbar sind und neben den bekannt guten Beschichtungseigenschaften zusätzlich besonders gut geeignet sind zum Beschichten großer Formteile mit scharfen Ecken und Kanten.

Die Lösung der Aufgabe gelingt nach den in den Patentansprüchen beschriebenen Verfahren.

Einsetzbare Polyamide für das Verfahren sind Polyamid 11, Polyamid 12 und Polyamide mit mehr als 12 aliphatisch gebundenen Kohlenstoffatomen pro Carbonamidgruppe, vorzugsweise Polyamid 12. Außerdem können die entsprechenden Copolyamide oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomerer, wie Caprolactam, Hexamethylendiamin, 2-Methylpentandiamin-(1,5), Octamethylendiamin-(1,8), Dodecamethylendiamin, Isophorondiamin, Trimethylhexamethylendiamin, Adipinsäure, Korksäure, Azelainsäure, Sebacinsäure, Dodecandisäure, Aminoundecansäure, enthalten. Die im folgenden als Polyamide bezeichneten genannten Homo- und Copolyamide werden als Granulate oder Schrot eingesetzt, die eine relative Lösungsviskosität zwischen 1,7 und 2,0 (gemessen in 0,5 %iger m-Kresollösung bei 25°C nach DIN 53 727), bevorzugt zwischen 1,75 und 1,95, besitzen. Sie können durch Polykondensation, hydrolytische oder acidolytische bzw. aktivierte anionische Polymerisation nach bekannten Verfahren hergestellt werden. Bevorzugt werden ungeregelte Polyamide mit Endgruppenverhältnissen $NH_2$/ $COOH$=40/60 bis 60/40 eingesetzt. Das Einsatzpolyamid kann maximal 0,2 Gewichtsprozen $H_3PO_4$ enthalten. Bevorzugt wird $H_3PO_4$-freies Polyamid eingesetzt.

Die zuzusetzende Menge an Phosphorsäure beträgt 0,3 bis 1,2, insbesondere 0,4 bis 1,0 Gewichtsprozent, bezogen auf das Polyamid. Die Zugabe erfolgt in der Abkühlphase der Polyamidlösung vor der Fällung, vorteilhaft jedoch nach der Fällungsphase unter kräftigem Rühren.

Besonders vorteilhaft läßt sich das Verfahren anwenden bei dem verbesserten Verfahren, wie es in der deutschen Patentanmeldung P 35 10 691.3 vom 23.03.85 beschrieben ist.

Im folgenden soll dieses Verfahren nochmals besonders beschrieben werden.

Man kühlt die bei 140 bis 150°C hergestellte Lösung des Polyamids in Ethanol mit mindestens 10°C/h unter Abdestillieren von Ethanol rasch bis zur Sättigungsgrenze (ca. 125°C) ab und stellt die Manteltemperatur in der anschließenden weiteren Abkühlung bis zur Fällungsgrenze im Bereich von 90 bis 113°C unter weiterem Abdestillieren von Ethanol im Gleichschritt mit der Tempratur der Lösung derart ein, daß die Manteltemperatur maximal 3°C tiefer als die Innentemperatur liegt, und schließlich hält man die Lösung in der anschließenden Fällungsphase durch weiteres Abdestillieren von Ethanol isotherm.

Es war nicht zu erwarten, daß—trotz des hohen Molmassenabbaus des eingesetzten Polyamids—im weiten Bereich der Molmassenabbau vom Temperaturprogramm des Fällverfahrens unabhängig ist.

Ferner wird überraschenderweise die Phosphorsäure bei der Zugabe in die Polyamidsuspension von allen vorgebildeten Polyamidkörnern gleichmäßig aufgenommen, so daß beim Beschichten mit dem hochviskosen Pulver keinerlei Oberflächenstörungen und Verlaufsschwierigkeiten beobachtet werden.

Schließlich war auch nicht zu erwarten, daß Pulver erhalten werden, welche einwandfreie Überzüge ergeben. Denn man sollte erwarten, daß insbesondere bei schneller Fällung und schnellem Kornwachstum mehr Lösemittel in den Körnern eingeschlossen wird und die Porosität der Körner die Überzugsqualität negative beeinflussen.

Nach dem Verfahren der Erfindung gelingt es somit wahlweise, sowohl Wirbelinterpulver als auch Elektrostatikpulver herzustellen. Diese Fällpulver ziegen bei der Beschichtung von schwierigen Metallteilen ausgezeichnete Eigenschaften hinsichtlich Dehnbarkeit und Kantenbeschichtung als auch Beständigkeit gegenüber alkalischen wäßrigen Lösungen. Die mechanische Festigkeit der Überzüge liegt auf einem dem Mahlpulver entsprechenden hohen Niveau.

Die Fällung kann auch in Gegenwart von Pigmenten, wie Titandioxid, Ruß, $BaSO_4$, ZnS, Cadmiumrot, Eisenoxid, oder Stabilisatoren, wie 4-Hydroxy-3,5-di-tert.-butylphenol-propionsäure, 4-Hydroxy-3,5-di-tert.-butylphenol-propionsäure-hexamethylendiamin-bisamid, -propionsäureester mit einem aliphatischen Alkohol mit 1 bis 18 C-Atomen, Tris-alkylphenyl-, Tris-alkyl-, Tris-aryl- oder gemischten Estern der phosphorigen Säure, deren Alkylrest 1 bis 16 C-Atome enthält und geradkettig oder verzweigt ist, oder in Gegenwart von Tensiden vorgenommen werden.

Beispiel 1

400 kg ungeregelt hergestelltes Polyamid 12 mit einem Endgruppenverhältnis (—$NH_2$):(—$COOH$)=45:55, einem Extraktgehalt von 0,5 Gewichtsprozent und einer relativen Lösungsviskosität von 1,85 werden zusammen mit 2 500 l mit Methylethylketon-vergälltem Ethanol mit einem Wassergehalt von 1 Gewichtsprozent, in einem 3-$m^3$-Reaktor (d=1 600 mm) unter Rühren mit einer Aufheizgeschwindigkeit von 30°C/Stunde bis 154°C aufgeheizt und 60 Minuten bei dieser Temperatur gehalten. Anschließend wird die Manteltemperatur auf 124°C gestellt und die Lösung bei der

3

Rührerdrehzahl (Blattrührer, d=800 mm) 50 Upm durch Destillation des Ethanols in eine externe Vorlage mit einer mittleren Geschwindigkeit von 20°C pro Stunde abgekühlt. Ab der Innentemperatur 125°C wird die Manteltemperatur so geregelt, daß sie nicht mehr als 3°C unter der Innentemperatur liegt.

Bei der Innentemperatur 109°C beginnt die Fällung, welche sich durch einen Anstieg der Innentemperatur bemerkbar macht. Zu Beginn dieser Fällungsphase wird die Rührerdrehzahl auf 70 Upm erhöht und die Destillationsleistung so weit gesteigert, daß die Innentemperatur bis zum Fällungsende, welches sich durch starke Abnahme der Innentemperatur deutlich macht, bei 109±0,3°C bleibt. Die Fällung dauert 20 Minuten (die abdestillierte Menge an Ethanol beträgt insgesamt 650 l). Anschließend wird die Destillation abgestellt und die entstandene Suspension über den Reaktormantel auf 45°C abgekühlt und 2,82 kg 85 %ige Phosphorsäure in die Suspension eingerührt. Die Trocknung der Suspension erfolgt in einem Schaufeltrockner bis auf eine Restfeuchte von 0,15 Gewichtsprozent.

Die mittels Bildanalysator gemessene Korngrößenverteilung lautet:

$$< 40\ \mu m:\quad 0,2\ \text{Gewichtsprozent}$$
$$< 80\ \mu m:\quad 18\ \text{Gewichtsprozent}$$
$$<120\ \mu m:\quad 76\ \text{Gewichtsprozent}$$
$$<160\ \mu m:\quad 98\ \text{Gewichtsprozent}$$
$$<200\ \mu m:\quad 100\ \text{Gewichtsprozent.}$$

Mit dem Pulver werden an 3-mm-Blechen, die zuvor in einem Umluftofen auf 270°C erhitzt wurden, 300 µm starke Wirbelsinterüberzüge hergestellt. Der Molmassenaufbau beim Beschichten liegt mit 0,13 $\eta_{rel}$-Einheiten gut. Die Kantenbeschichtung ist hervorragend.

Beispiele 2 und 3

Hierbei wird wie in Beispiel 1 gearbeitet, jedoch die Aufheizgeschwindigkeit erniedrigt bzw. die Auflösetemperatur erhöht. Eine Abhängigkeit des Molmassenabbaus von diesen Parametern wird nicht gefunden.

Beispiel 4

Hierbei wird ebenfalls analog dem Beispiel 1 gearbeitet, jedoch die Abkühlgeschwindigkeit auf 10°C pro Stunde eingestellt. Um von der Korngrößenverteilung her dem Beispiel 1 zu entsprechen, wird die Rührerdrehzahl in der Abkühlphase bei 35 Upm gehalten. Die Fällungszeit beträgt bei 113°C 110 Minuten.

Vergleichsbeispiele 1 bis 3

Es wird analog den Beispielen 1 bis 3 gearbeitet, jedoch mit einem Polyamidgranulat, welches bereits 0,6 Gewichtsprozent Phosphorsäure enthält. Dabei findet man eine starke Abhängigkeit des Molmassenabbaus von den eingestellten Parametern. Diese Abhängigkeit schlägt sich in der Überzugsqualität negative nieder.

In der Tabelle sind die Versuchsergebnisse aus den Beispielen und Vergleichsbeispielen zusammengestellt.

TABELLE

| | Ausgangspolyamid | H₃PO₄-Gehalt (Gew.-%) | Aufheizge-schwindig-keit (°C/h) | Löse-temp. (°C) | Löse-zeit (min) | Rührerdrehzahl in der Abkühl-phase (Upm) | Abkühlge-schwin-digkeit (°C/h) | Fällungs-Zeit (min) | Temp. (°C) | H₃PO₄-Zugabe nach Fällung (Gew.-%) | Pulver $\eta_{rel}$ | $\eta_{rel}$ | Beschichtung Kantenabdeckung |
|---|---|---|---|---|---|---|---|---|---|---|---|---|---|
| | $\eta_{rel}$ | | | | | | | | | | | | |
| Beispiel 1 | 1,85 | — | 30 | 145 | 60 | 50 | 20 | 20 | 109 | 0,6 | 1,72 | 1,85 | sehr gut |
| Beispiel 2 | 1,85 | — | 10 | 145 | 60 | 50 | 20 | 20 | 109 | 0,6 | 1,72 | 1,85 | sehr gut |
| Beispiel 3 | 1,85 | — | 30 | 155 | 60 | 50 | 20 | 20 | 109 | 0,6 | 1,72 | 1,85 | sehr gut |
| Beispiel 4 | 1,85 | — | 30 | 145 | 60 | 35 | 10 | 110 | 113 | 0,6 | 1,72 | 1,85 | sehr gut |
| Vgl.-Bsp. 1 | 1,85 | 0,6 | 30 | 145 | 60 | 50 | 20 | 22 | 110 | — | 1,68 | 1,86 | relativ schlecht |
| Vgl-Bsp. 2 | 1,85 | 0,6 | 10 | 145 | 60 | 50 | 20 | 20 | 109 | — | 1,65 | 1,74 | schlecht |
| Vgl.-Bsp. 3 | 1,85 | 0,6 | 30 | 155 | 60 | 50 | 20 | 18 | 109 | — | 1,60 | 1,69 | schlecht |

EP 0 200 852 B1

## EP 0 200 852 B1

**Patentansprüche**

1. Verfahren zur Herstellung von nachkondensierbaren, hochmolekularen pulverförmigen Beschichtungsmitteln auf der Basis von Polyamiden mit mindestens zehn aliphatisch gebundene Kohlenstoffatomen pro Carbonamidgruppe oder Copolyamiden oder einer Mischung aus Homo- und Copolyamiden, welche mindestens 70% der genannten Bausteine enthalten, nach dem Fällungsverfahren, wobei eine heiße ethanolische Lösung des Polyamids unter Rühren und unter Abdestillieren von Ethanol unter Eigendruck rasch bis zur Sättigungsgrenze (ca. 125°C) abgekühlt wird und in der anschließenden weiteren Abkühlungsphase bis zum Einstellen der Fällungstemperatur im Bereich von 90 bis 113°C unter weiterem Abdestillieren von Ethanol die Manteltemperatur im Gleichschritt mit der Temperatur der Lösung eingestellt wird, derart, daß die Manteltemperatur maximal 3°C tiefer liegt und schließlich in der anschließenden Fällungsphase durch weiteres Abdestillieren von Ethanol die Lösung isotherm gehalten wird, dadurch gekennzeichnet, daß man von ungeregelten Polyamiden mit einer relativen Lösungsviskosität von 1,7 bis 2,0 (gemessen in 0,5 %iger m-Kresollösung bei 25°C) ausgeht, welche 0 bis 0,2 Gewichtsprozent Phosphorsäure enthalten und nach dem Lösen der Polyamide in der Abkühlungsphase vor der Fällung in der Lösung oder nach der Fällungsphase in der Suspension 0,3 bis 1,2 Gewichtsprozent Phosphorsäure, bezogen auf das Polyamid, verteilt.

2. Verfahren zur Herstellung von pulverförmigen Beschichtungsmitteln nach Anspruch 1, dadurch gekennzeichnet, daß das einzusetzende Polyamid phosphorsäurefrei ist und das Verhältnis der Aminoendgruppen zu den Carboxylendgruppen 40:60 bis 60:40 beträgt.

**Revendications**

1. Procédé de préparation d'agents d'enduction pulvérulents, post-condensables, de poids moléculaire élevé, à base de polyamides comportant au moins dix atomes de carbone aliphatiquement liés par groupe carboxylamide, ou de copolyamides oui d'un mélange d'homo-polyamides et de co-polyamides renfermant au moins 70% des motifs indiqués, selon le procédé de précipitation, tandis qu'une solution éthanolique chaude de la polyamide est, tout en agitant et en éliminant l'éthanol par distillation sous la pression propre, rapidement, refroidie jusqu'à la limite de saturation (environ 125°C) et que dans l'autre phase de refroidissement qui suit, la température de la chemise est ajustée à la même cadence à la température de la solution, en poursuivant l'élimination de l'éthanol par distillation, ce jusqu'à ce que la température de précipitation soit ajustée dans un domaine de 90 à 113°C, de sorte que la température de la chemise soit au maximum de 3°C au-dessous et que l'on maintient finalement la solution isotherme dans la phase de précipitation qui suit en poursuivant l'élimination de l'éthanol par distillation, caractérisé par le fait que l'on part de polyamides non réglées présentant une viscosité relative en solution de 1,7 à 2,0 (mesurée à 25°C dans une solution à 0,5% de méta-crésol) et renfermant de zéro à 0,2% en poids d'acide phosphorique et, qu'après, la dissolution des polyamides, dans la phase de refroidissement, avant précipitation dans la solution, ou après la phase de précipitation, dans la suspension, on répartit de 0,3 à 1,2% en poids d'acide phoshorique, relativement à la polyamide.

2. Procédé pour la préparation d'agents d'enduction pulvérulents selon la revendication 1, caractérisé par le fait que la polyamide à utiliser est exempte d'acide phosphorique et que le rapport des groupes amine terminaux et des groupes hydroxyle terminaux est de 4:60 à 60:40.

**Claims**

1. A process for the preparation of post-condensable, high molecular weight pulverulent coating compositions based on polyamides having at least ten aliphatically bonded cabron atoms per carboxamide group or on copolyamides or a mixture of homo- and co-polyamides which contain at least 70% of the abovementioned building blocks, by the precipitation process, in which a hot ethanolic solution of the polyamide is rapidly cooled to the saturation limit (about 125°C) while stirring and distilling off ethanol under autogenous pressure, and in the subsequent further cooling phase until the precipitation temperature in the range of 90 to 113°C is reached while ethanol continues to be distilled off the jacket temperature is adjusted in parallel with the temperature of the solution so that the jacket temperature is at most 3°C below the solution temperature, and finally in the subsequent precipitation phase the solution is kept isothermal by continuing the distilling off of ethanol, characterized in that the starting materials are unregulated polyamides having a relative solution viscosity of 1.7 to 2.0 (mesaured in 0.5% strength m-cresol solution at 25°C) and these contain 0 to 0.2 per cent by weight of phosphoric acid, and after dissolving the polyamides 0.3 to 1.2 per cent by weight of phosphoric acid, relative to the polyamide, is distributed in the solution in the cooling phase before precipitation or in the suspension after the precipitation phase.

2. A process for the preparation of pulverulent coating compositions according to claim 1, characterized in that the polyamide to be used is free of phosphoric acid and the ratio of the terminal amino groups to the terminal carboxyl groups is 40:60 to 60:40.